# EUROPÄISCHE PATENTSCHRIFT

(11) **EP 3 566 045 B1**
(45) Veröffentlichungstag und Bekanntmachung des Hinweises auf die Patenterteilung: **09.09.2020**
(21) Anmeldenummer: 18700637.4
(22) Anmeldetag: 03.01.2018
(51) Int. Cl.: G01N 27/447, G01N 30/80, G01N 30/88, G01N 30/96, G01N 30/46

(54) **VERFAHREN ZUR ZWEIDIMENSIONALEN PROTEINTRENNUNG UND PROTEIN-TRENNVORRICHTUNG**
METHOD FOR TWO-DIMENSIONAL PROTEIN SEPARATION AND PROTEIN-SEPARATING DEVICE
PROCÉDÉ DE SÉPARATION PROTÉIQUE BIDIMENSIONNELLE ET DISPOSITIF DE SÉPARATION PROTÉIQUE

(30) Priorität: 06.01.2017 DE 102017100189
(43) Veröffentlichungstag der Anmeldung: 13.11.2019
(73) Patentinhaber: Technische Universität Braunschweig, 38106 Braunschweig (DE)
(72) Erfinder: WÄTZIG, Hermann, 38104 Braunschweig (DE); MAUL, Kai-Jorrit, 38106 Braunschweig (DE); KAHLE, Julia, 38100 Braunschweig (DE); HAHNE, Thomas, 38444 Wolfsburg (DE)
(74) Vertreter: Gramm, Lins & Partner Patent- und Rechtsanwälte PartGmbB
(86) Internationale Anmeldenummer: PCT/EP2018/050139
(87) Internationale Veröffentlichungsnummer: WO 2018/127515

(56) Entgegenhaltungen:
- WO-A2-2004/017040
- US-A1- 2006 118 488
- US-A1- 2008 311 610
- US-B1- 6 749 734
- US-B2- 6 969 452
- XUEZHEN KANG ET AL: "Chromatofocusing Using Micropellicular Column Packings with Computer-Aided Design of the Elution Buffer Composition", ANALYTICAL CHEMISTRY, Bd. 74, Nr. 5, 1. März 2002 (2002-03-01), Seiten 1038-1045, XP055463578, ISSN: 0003-2700, DOI: 10.1021/ac0109319

## Beschreibung

Die Erfindung betrifft ein Verfahren zur zweidimensionalen Proteintrennung mit den Schritten (a) Trennen der Proteine gemäß ihres isoelektrischen Punktes durch lonenaustausch-Chromatographie mittels einer lonenaustauschersäule, sodass ein Fraktionskollektiv erhalten wird, und (b) kapillarelektrophoretische Trennung des Fraktionskollektivs. Gemäß einem zweiten Aspekt betrifft die Erfindung eine Protein-Trennvorrichtung mit (i) einer Ionenaustauschersäule zum Durchführen einer lonenaustausch-Chromatographie, sodass ein Fraktionskollektiv erhalten wird, und (ii) einer Trennvorrichtung zur kapillarelektrophoretischen Trennung des Fraktionskollektivs.

Ein ähnliches Verfahren ist aus der US 6,969,452 B2 bekannt. Dort wird jede einzelne Fraktion mittels einer Glaskapillare elektrophoretisch aufgetrennt. Dieses Verfahren konnte sich nicht durchsetzen. Der Grund hierfür ist, dass die Trennung mittels der Kapillaren entweder sehr langsam vor sich geht oder aber, wenn nämlich eine hohe Spannung angelegt wird, die entstehende Wärme aufwendig abgeführt werden muss oder das Messergebnis verfälschen kann. Ein weiterer Nachteil ist die vergleichsweise geringe Trenngeschwindigkeit. Zwar bedeutet das in der genannten Druckschrift beschriebene Verfahren einen deutlichen Fortschritt gegenüber den vorher bekannten Verfahren, der Vorteil der Zeitersparnis ist jedoch nicht so groß, als dass er den Nachteil aufwiegt, dass die Messerergebnisse schlecht mit den Ergebnissen verglichen werden können, die mit zuvor angewendeten Verfahren erhalten wurden.

Aus der US 7,387,765 B2 ist weiterhin ein Verfahren zur Identifikation von Proteinen bekannt, in welchem die Proteine zunächst hydrolysiert und mittels Festphasenextraktion aufgereinigt werden. Anschließend wird das Substrat mittels Kapillarelektrophorese aufgetrennt und der Elektrospray-Massenspektrometrie zugeführt.

Die Veröffentlichung "Hybrid Capillary/Microfluidic System for Comprehensive Online Liquid Chromatography-Capillary Electrophoresis-Electrospray lonization-Mass Spectrometry" (Mellors et. al.; Anal Chem 2013, 85:4100-4106) beschreibt ein Identifikationsverfahren für Proteine, bei welchem die Proteine mittels RP-Phasen-Flüssigchromatographie und anschließender Kapillarelektrophorese getrennt werden. Die Identifikation erfolgt wiederum mittels Elektrospray-Massenspektrometrie.

Auch aus der US 2010/0116659 A1 und der US 2002/0033336 A1 sind Verfahren bekannt, in denen Proteine mittels Flüssigchromatographie und anschließender Kapillarelektrophorese getrennt werden.

Die US 2006/118488 A1 beschreibt ein Verfahren zur zweidimensionalen Proteintrennung, wobei als gelfreie Komponente eine Umkehrphasen-Hochleistungsflüssigkeitschromatographie eingesetzt wird, an die sich eine Kapillarelektrophorese auf einem Chip anschließt.

Die US 6 749 734 B1 betrifft eine mikrostrukturierte Vorrichtung zur Durchführung einer Kapillar-Array-Elektrophorese (CAE) sowie ein Verfahren zur Durchführung der Kapillar-Array-Elektrophorese.

Die US 2008/311610 A1 betrifft ein Verfahren zur massenspektrometrischen Identifikation von Analyst-Makomolekül-Komplexen, beispielsweise Protein-Arzneistoff-Komplexen. Zur Vorbereitung vor der Massenspektrometrie kann eine Probe beispielsweise mittels Elektrophorese oder eines chromatographischen Trennschritts aufgetrennt werden.

Die WO 2004/017040 A2 beschreibt eine multidimensionales Chromatographiesystem zur Proteom-Analyse, bei dem mehrere chromatographische Trennschritte zur Identifikation einzelner Proteine des Proteoms nacheinander geschaltet sind, beispielsweise zunächst eine Affinitätschromatographie, anschließend eine Größenausschluss-Chromatographie und eine lonenaustausch-Chromatographie.

Die Publikation "Chromatofocusing Using Micropellicular Column Packings with Computer-Aided Design of the Elution Buffer Composition" (Xuezhen Kang et al, Anal Chem 2002, 74:1038-1045) beschreibt ein Verfahren zur Chromatofokussierung, wobei das bei der Anionenaustausch-Chromatographie verwendete Elutionsmittel computerunterstützt ermittelt wird.

Der Erfindung liegt die Aufgabe zugrunde, die zweidimensionale Proteintrennung zu verbessern.

Die Erfindung löst das Problem durch ein gattungsgemäßes Verfahren, bei dem die kapillarelektrophoretische Trennung mittels eines Chips durchgeführt wird, und der Ionenaustauschersäule eine Vorsäule vorgeschaltet wird, die eine lipophile stationäre Phase aufweist. Gemäß einem zweiten Aspekt löst die Erfindung das Problem durch eine gattungsgemäße Protein-Trennvorrichtung, bei der die Trennvorrichtung einen Chip, der zumindest eine Nut aufweist, die in einer Oberfläche des Chips ausgebildet ist, und ein in der zumindest einen Nut angeordnetes Elektrophoresegel besitzt, und eine Spannungsquelle, die das Elektrophoresegel kontaktiert, umfasst, und die Protein-Trennvorrichtung eine Vorsäule aufweist, die der Ionenaustauschersäule vorgeschaltet ist und die eine lipophile stationäre Phase aufweist.

Vorteilhaft an der Erfindung ist, dass die zweidimensionale Proteintrennung deutlich schneller möglich ist. So kann das Verfahren, wie gemäß einer bevorzugten Ausführungsform vorgesehen, innerhalb von höchstens drei Stunden, vorzugsweise innerhalb von höchstens zwei Stunden, durchgeführt werden. In anderen Worten liegt das Ergebnis innerhalb der genannten Zeit vor. Das bedeutet einen deutlichen Zeitvorteil gegenüber dem Stand der Technik. Ein weiterer Vorteil ist es, dass die Ergebnisse mit klassischen, 2D-gelelektrophoretisch erhaltenen Ergebnissen korrespondieren, sodass mit 2D-Gelelektrophorese erhaltene Messergebnisse zum Vergleich verwendet werden können.

Die chip-basierte kapillarelektrophoretische Trennung erfolgt so schnell, dass sie im Wesentlichen die gleiche Zeit benötigt wie die lonenaustausch-Chromatographie. Anders als bei Verfahren nach dem Stand der Technik ist damit die Kapillarelektrophorese nicht mehr der geschwindigkeitsbestimmende Schritt. Das erfindungsgemäße Verfahren gestattet es, Routineuntersuchungen, die mit klassischen Verfahren mehrere Tage in Anspruch nahmen, nun innerhalb weniger Stunden durchzuführen. Das eröffnet die Möglichkeit, die zweidimensionale Proteintrennung in Untersuchungen einzusetzen, für die diese bisher zu langsam war. So kann die Veränderung in der Proteinzusammensetzung, beispielsweise von Körperflüssigkeiten im Verlauf einer Krankheit oder unter Medikamentengabe, nun systematisch untersucht werden. Das war mit dem bisherigen Verfahren praktisch unmöglich, da das bedeutet hätte, dass eine Vielzahl an Protein-Trennvorrichtungen vorgehalten werden mussten. Aufgrund des hohen Preises derartiger Anlagen, der bei mehreren 10.000 € liegt, ist das jedoch nur theoretisch möglich gewesen.

Vorteilhaft an der Erfindung ist zudem, dass der Gehalt des zu trennenden Produkts an einem bestimmten Protein durch die hohe Leistungsfähigkeit der Chip-Elektrophorese sehr präzise bestimmt werden kann.

Im Rahmen der vorliegenden Beschreibung wird unter dem Fraktionskollektiv eine Gesamtheit an Fraktionen verstanden. Die Fraktionen können kontinuierlich oder - bevorzugt - diskret sein. Unter einer diskreten Fraktion wird verstanden, dass eine Menge an Flüssigkeit in einem Behältnis vorliegt. Vorzugsweise werden zumindest 15 Fraktionen, insbesondere zumindest 25 Fraktionen, erzeugt, die das Fraktionskollektiv bilden.

Die lonenaustausch-Chromatographie trennt nach Affinität zur stationären lonenaustauschphase. Die lonenaustausch-Chromatographie wird vorzugsweise so durchgeführt, dass das Trennergebnis dem Trennergebnis nach isoelektrischer Fokussierung entspricht. Das wird insbesondere dadurch erreicht, dass (i) eine starke Anionenaustauscherphase (SAX-Phase) verwendet wird, die insbesondere wie folgt aufgebaut ist: eine Stützstruktur aus einem Polymer und einer an die Stützstruktur gebundenen quartären Ammoniumstruktur, zum Beispiel Tetramethylammonium und dass (ii) eine Gradientenelution durchgeführt wird. Zudem wird eine Vorsäule mit lipophiler stationärer Phase verwendet. Durch die isoelektrische Fokussierung werden die Proteine gemäß ihres isoelektrischen Punkts getrennt.

Die Porengröße der stationären Phase der Ionenaustauschersäule liegt vorzugsweise zwischen 50 und 150 nm. Die genannten Angaben sind die Mittelwerte aller Porengrößen. Diese werden beispielsweise pyknometrisch bestimmt. Die Partikelgröße der stationären Phase der Ionenaustauschersäule beträgt vorzugsweise 6 bis 12 µm, vorzugsweise 8 µm. Die genannten Angaben sind die Mittelwerte aller Partikelgrößen. Die Partikelgröße ist insbesondere der aerodynamische Durchmesser bei 23°C und 1013 hPa.

Günstig ist es, wenn die kapillarelektrophoretische Trennung eine Natriumdodecylsulfat-Polyacrylamidgel-Elektrophorese ist.

Die kapillarelektrophoretische Trennung erfolgt vorzugsweise in einem Kanal, der in eine Oberfläche des Chips eingearbeitet ist. Vorzugsweise beträgt eine Länge des Kanals zumindest 1,5 cm, insbesondere zumindest 2 cm. Günstig ist es, wenn der Kanal eine Länge von höchstens 5 cm, insbesondere höchstens 4 cm hat. Eine Tiefe des Kanals, also der Abstand des Tiefenpunkts zur Oberfläche des Chips, beträgt vorzugsweise zumindest 25 µm und vorzugsweise höchstens 75 µm. Für die Breite des Kanals gilt vorzugsweise das Gleiche.

Der Ionenaustauschersäule ist eine Vorsäule vorgeschaltet, die eine lipophile stationäre Phase aufweist. Es hat sich herausgestellt, dass so besonders gut reproduzierbare Ergebnisse erhalten werden. Der Grund dafür ist vermutlich, dass lipophile Bestandteile der zu untersuchenden Proteinmischung die lonenaustauschersäule so verändern können, dass sich das Laufverhalten der Proteine ändert. Durch die Vorsäule mit der lipophilen stationären Phase werden lipophile Bestandteile der Probe und Partikel in der Probe zurückgehalten, sodass dieser Effekt nicht auftritt.

Günstig ist es, wenn die lipophile stationäre Phase ein Kieselgel aufweist, an das Kohlenwasserstoffketten gebunden sind. Vorzugsweise handelt es sich um kurze Kohlenwasserstoffketten, beispielsweise Methylgruppen.

Das Durchführen der lonenaustausch-Chromatographie erfolgt vorzugsweise unter Gradientenelution, wobei eine Konzentration eines Alkalimetallhalogenids, insbesondere von Natriumchlorid, mit der Zeit zunimmt. Unter einer Gradientenelution wird verstanden, dass die Zusammensetzung der flüssigen Phase, also des Eluenten, sich mit der Zeit ändert. Günstig ist es, wenn eine Flussrate zumindest 0,5, vorzugsweise 0,9 ml/min beträgt.

Günstig ist es, wenn die Flussrate höchstens 5 ml/min, vorzugsweise höchstens 1,7 ml/min, beträgt. Es hat sich herausgestellt, dass mit solchen Flussraten eine hohe Trennschärfe und gute Reproduzierbarkeit erzielt werden.

Günstig ist es, wenn bei der lonenaustausch-Chromatographie eine erste Komponente des Eluenten mittels Tris(hydroxymethyl)aminomethan auf einen pH-Wert 8,5 ± 0,2 gepuffert ist. Vorzugsweise weist der Eluent eine zweite Komponente auf, die sich nur dadurch von der ersten Komponenten unterscheidet, dass sie Natriumchlorid enthält. Vorzugsweise hat das Natriumchlorid eine Konzentration von 0,75 ± 0,15 mol/L (Mol pro Liter).

Eine Konzentrationsänderungsgeschwindigkeit liegt vorzugsweise bei 2,5 ± 0,5 Prozentpunkte pro Minute. Die Konzentrationsänderungsgeschwindigkeit bezieht sich auf die Konzentration der zweiten Komponente an Eluenten. Wird, was bevorzugt ist, mit einem Eluenten begonnen, der zu 100% aus der ersten Komponente besteht, wird diese innerhalb von 40 Minuten auf 100% an der zweiten Komponente geändert. Die angegebenen Parameter führen zu einem reproduzierbaren, schnellen Messergebnis.

Günstig ist es, wenn das Verfahren die Schritte eines Regenerierens der lonenaustauschersäule durch Spülen der Ionenaustauschersäule mit der ersten Komponente, die zusätzlich Natriumchlorid in einer Konzentration von zumindest 1 mol/L, insbesondere 1,5 mol/L, enthält, für mindestens 5 min umfasst.

Vorzugsweise wird die Ionenaustauschersäule danach durch Spülen mit der ersten Komponente für zumindest 8 min rekonditioniert. Danach kann die Ionenaustauschersäule für eine weitere Proteintrennung verwendet werden. Die angegebenen Zeiten zeigen, dass mit diesem Verfahren eine Vielzahl an Proteingemischen in kurzer Zeit getrennt werden kann.

Die kapillarelektrophoretische Trennung erfolgt vorzugsweise mit einer elektrischen Spannung von dem Mittel höchstens 800 Volt, insbesondere höchstens 400 Volt. Zwar ist es auch möglich, eine höhere Spannung zu verwenden, diese beträgt aber vorzugsweise höchstens 2000 Volt. So geringe Spannungen führen zu einem kleinen elektrischen Strom und damit zu einer geringen Erwärmung des Chips, die in der Regel vernachlässigt werden kann. Vorzugsweise wird der Chip temperiert, also auf einer vorgegebenen Temperatur gehalten, die beispielsweise 23°C betragen kann. Wenn davon gesprochen wird, dass die Spannung im Mittel höchstens den angegebenen Wert hat, so wird damit eine Mittelung über die Trennzeit verstanden.

Eine erfindungsgemäße Protein-Trennvorrichtung besitzt vorzugsweise einen Probensammler, der eingerichtet ist zum automatischen Sammeln der Fraktionen des Fraktionskollektivs in diskreten Sammelbehältern, und eine Pipettiervorrichtung, die ausgebildet ist zum automatischen Entnehmen von Proben aus den Sammelbehältern und Einbringen der Proben in je einen Startbereich der zumindest einen Nut. Es ist möglich, nicht aber notwendig, dass auf dem Chip zwei oder mehr Nuten vorhanden sind.

Es sei darauf hingewiesen, dass der Begriff der Nut in keine spezifische Querschnittsfläche oder Querschnittsform implizieren soll. Statt von einer Nut könnte daher auch von einem Kanal gesprochen werden.

Im Folgenden wird die Erfindung anhand der beigefügten Zeichnungen näher erläutert. Dabei zeigt
- Figur 1: eine erfindungsgemäße Protein-Trennvorrichtung zum Durchführen eines erfindungsgemäßen Verfahrens,
- Figur 2: ein Diagramm, das die Trennung in der zweiten Dimension an einem Testgemisch aus Proteinen zeigt, und
- Figur 3: eine zweidimensionale Darstellung, bei der die Fluoreszenz in z-Richtung aufgetragen ist über der Laufzeit in x-Richtung, wobei die unterschiedlichen Fraktionen entlang der y-Achse aufgetragen sind.

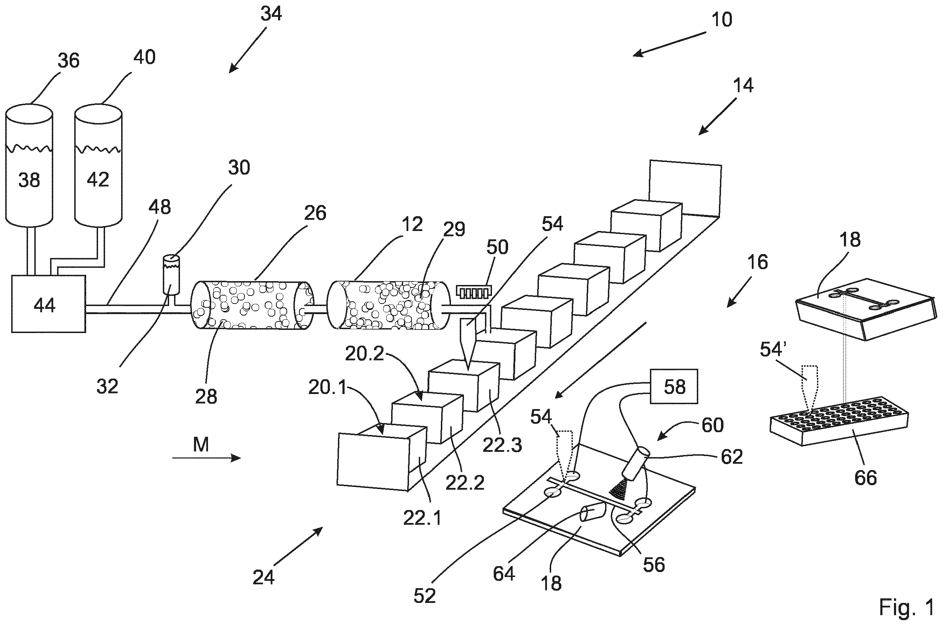

Figur 1 zeigt eine erfindungsgemäße Protein-Trennvorrichtung 10 mit einer lonenaustauschersäule 12 zum Herstellen eines Fraktionskollektivs 14 und mit einer Trennvorrichtung 16, die einen Chip 18 umfasst. Zum Sammeln von Fraktionen 20.i (i = 1, 2,...N) besitzt die Protein-Trennvorrichtung 10 Sammelbehälter 22.i, die Teile eines Probensammlers 24 sind.

Der Ionenaustauschersäule 12 ist eine Vorsäule 26 vorgeschaltet, die eine schematisch eingezeichnete lipophile stationäre Phase 28 besitzt. In der lonenaustauschersäule 12 ist eine stationäre Phase 29 enthalten. In einer Materialflussrichtung M vor der Vorsäule 26 ist eine Probenaufgabe 30 angeordnet, mit der eine Probe 32 die eine Vielzahl an Proteinen enthält, die Vorsäule 26 und danach in die Ionenaustauschersäule 12 eingebracht werden kann.

Die Ionenaustauschersäule 12 ist eine Agilent PL-SAX-Säule mit den Abmaßen 50 mm x 7,5 mm des Herstellers Agilent Technologies, Waldbronn, Deutschland. Die Porengröße beträgt 100 nm, die Partikelgröße ist 8 µm. Die Vorsäule 26 kann beispielsweise eine Guard Coloumn RP1 der Firma Phenomenex, Torrence, USA sein.

Die Protein-Trennvorrichtung 10 besitzt ein Fließmittelreservoir 34 zum Herstellen eines Eluenten. In einem ersten Behälter 36 ist eine erste Komponente 38 enthalten. Die erste Komponente 38 besteht aus einer wässrigen Lösung aus 20 mM TRIS (Tris(hydroxymethyl)aminomethan), die so auf pH 8,5 gepuffert ist. In einem zweiten Behälter 40 ist eine zweite Komponente 42 gespeichert. Die zweite Komponente hat die gleiche Zusammensetzung wie die erste Komponente 38 und enthält zusätzlich 0,75 mol/l Natriumchlorid. Alle Chemikalien sind mindestens in p.a.-Qualität. Sowohl die erste Komponente 38 als auch die zweite Komponente 42 sind wässrige Lösungen und enthalten neben den angegebenen Verbindungen lediglich Wasser sowie unvermeidliche Verunreinigungen.

In einem Mischer 44 werden die erste Komponente 38 und die zweite Komponente 42 gemischt.

Zur Herstellung der ersten Komponente 38 werden 12,11 g TRIS-Base in einen 5 I-Kanister überführt und mit 5 l Reinstwasser aufgefüllt. Danach wird der Kanister verschlossen und geschüttelt. Der pH-Wert von 8,5 wird mit einmolarer Salzsäure eingestellt.

Die zweite Komponente 42 wird dadurch hergestellt, dass 43,83 g Natriumchlorid in einem 1 l-Messkolben eingewogen und mit der ersten Komponente 38 auf einen Liter aufgefüllt werden.

Die Probenaufgabe 30, die Säulen 12, 26 sowie der Probensammler 24 sind Bestandteile einer HPLC-Anlage 46. Als geeignet hat sich ein LaChrom Elite HPLC-System von VWR Hitachi herausgestellt.

Der Mischer 44 ist so programmiert, dass ein Eluent 48 erzeugt wird, der mit einer Flussrate f von beispielsweise f = 1,3 Milliliter pro Minute abgegeben wird. Nach erfolgter Probeninjektion der Probe 32 mittels der Probenaufgabe 30 wird zunächst für eine vorgegebene Zeit von im vorliegenden Fall fünf Minuten zu 100 % die erste Komponente 38 auf die Säulen 26, 12 geleitet. Anschließend wird ausgehend von 100 % Volumenfluss der ersten Komponente 38 innerhalb von 40 Minuten mit einer linearen Änderungsgeschwindigkeit von 2,5 Prozentpunkten pro Minute auf 100 % der zweiten Komponente 42 umgestellt. In anderen Worten liegt beispielsweise nach 10 Minuten ein Verhältnis der Volumenflüsse von 75 % der ersten Komponente 38 und 25 % der zweiten Komponente 42 vor. Nach 20 Minuten liegt ein Verhältnis von je 50 % der beiden Komponenten 38, 42 vor.

Im Anschluss an jede Proteintrennung wird zumindest die Ionenaustauschersäule 12, insbesondere beide Säulen 26, 12, mit einer Lösung gespült, die dadurch hergestellt wird, dass 87,66 g Natriumchlorid in einem 1 l-Messkolben eingewogen und mit der ersten Komponente 38 auf 1 l aufgefüllt wird. Mit dieser Flüssigkeit wird zumindest die Ionenaustauschersäule 12, insbesondere aber beide Säulen 26, 12 für zumindest 10 Minuten gespült. Nachfolgend werden die gespülten Säulen 26, 12 mit der ersten Komponente 38 für 15 Minuten rekonditioniert. Danach sind die Säulen 26, 12 für eine weitere Proteintrennung vorbereitet.

In Materialflussrichtung M hinter der Ionenaustauschersäule 12 ist ein Detektor 50 angeordnet. Bei dem Detektor 50 handelt es sich im vorliegenden Fall um einen Dioden-Array-Detektor. Der Detektor 50 dient der zusätzlichen Kontrolle, dass die Fraktionen reproduzierbar gesammelt werden. Zwar kann die Reproduzierbarkeit auch allein über das Endergebnis aus den Trennungen in der zweiten Dimension (Elektrophorese) abgeleitet werden, wenn aber Schwierigkeiten auftreten, ermöglicht das vom Detektor 50 aufgenommene Signal oft eine Fehlerdiagnose.

Nach einer vorgegebenen Wartezeit von im vorliegenden Fall T = 9 Sekunden nach Probeninjektion wird mit dem Sammeln der Fraktionen 20.i begonnen. Nach jeweils 80 Sekunden wird der Sammelbehälter 22.i gewechselt. Auf diese Weise werden N = 20 Fraktionen erhalten. Durch häufigeres Wechseln des Sammelbehälters werden entsprechend mehr Fraktionen erhalten. Dieses Vorgehen führt zu zweidimensionalen Übersichtschromatopherogrammen.

Wenn der Wechsel häufiger erfolgt, kann in der ersten Dimension, die durch die Ionenaustauschersäule 12 bewirkt wird, eine höhere Auflösung erhalten werden. Es ist beispielsweise möglich, jeweils alle 40 Sekunden auf einen neuen Sammelbehälter 22.i umzuschalten, sodass in der ersten Dimension 40 Fraktionen 20.i erhalten werden. Weiterhin kann die Auflösung variabel eingestellt werden. Beispielsweise können jeweils nach 80 Sekunden für die ersten 10 Fraktionen und dann mehrfach nach jeweils 20 Sekunden die Sammelbehälter gewechselt werden, um einen Bereich mit bestimmten Säure-Base-Eigenschaften besser aufzulösen, danach kann wieder alle 80 Sekunden der Sammelbehälter gewechselt werden. Als Sammelbehälter sind beispielsweise 2-mL-Eppendorf-Phiolen geeignet.

Von den jeweils gesammelten Fraktionen 20.i werden jeweils 2,5 Mikroliter in eine Probenaufnahme 52 des Chips 18 überführt.

Es ist möglich, dass zur Probenaufgabe ein Probeaufgabesystem verwendet wird, beispielsweise das System PerkinElmer LabChip® GX II Touch HT. Zum Übertragen der Fraktionen wird eine Pipettiervorrichtung verwendet, beispielsweise von der Firma Eppendorf.

Im Chip 18 ist eine Nut 56 ausgebildet, die auch als Kanal bezeichnet werden kann. Die Nut 56 ist mit einer Trennmatrix gefüllt, das Natriumdodecylsulfat (sodium dodecyl sulfate, SDS) enthält. Die Trennmatrix kann ein Gel sein.

Die Analyse erfolgt beispielsweise mittels eines LapChip® Protein-Kits von PerkinElmer, Boston, USA. Dazu werden die zugehörige Anleitung und Software verwendet. Als Protein-Kit sind Proteinexpress (HT) und Pico Protein für den Protein-Molmassenbereich von 14 bis 200 kDa sowie Low Molecular Weight für den Protein-Molmassenbereich von 5 - 8 kDa geeignet.

Die Trennvorrichtung 16 umfasst eine Spannungsquelle 58 zum Anlegen einer elektrischen Spannung U an das Gel in der Nut 56 und einen zweiten Detektor 60, der eine Lichtquelle 62 und ein Detektorelement 64 zum Detektieren von Fluoreszenzlicht aufweist. Ein weiteres Detektorelement zum Detektieren von transmittiertem Licht ist in Figur 1 nicht zu sehen.

Rechts in Figur 1 ist schematisch eingezeichnet, dass Teile der Fraktionen 20.i auch mittels der Pipette 54', einer Spritze oder einer sonstigen Übertragungsvorrichtung in die Vertiefungen einer Mikrotiterplatte 66 übertragen werden können. In einem automatisierten Prozess können dann die einzelnen Fraktionen nacheinander mittels Unterdruck durch eine Kapillare in den Chip 18 gezogen und dort elektrophoretisch aufgetrennt werden.

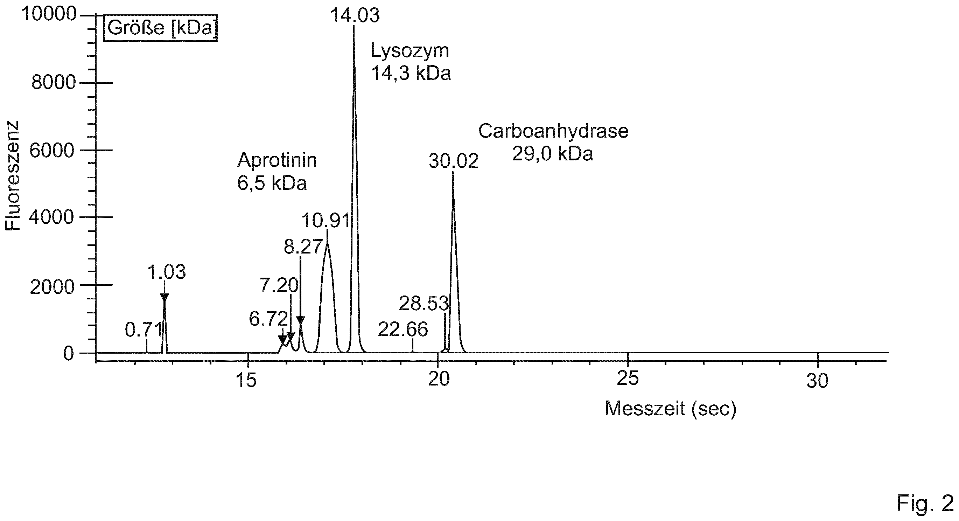

Figur 2 zeigt ein Diagramm, das die Fluoreszenz bei der elektrophoretischen Trennung für ein Testgemisch zur Instrumentenqualifizierung zeigt.

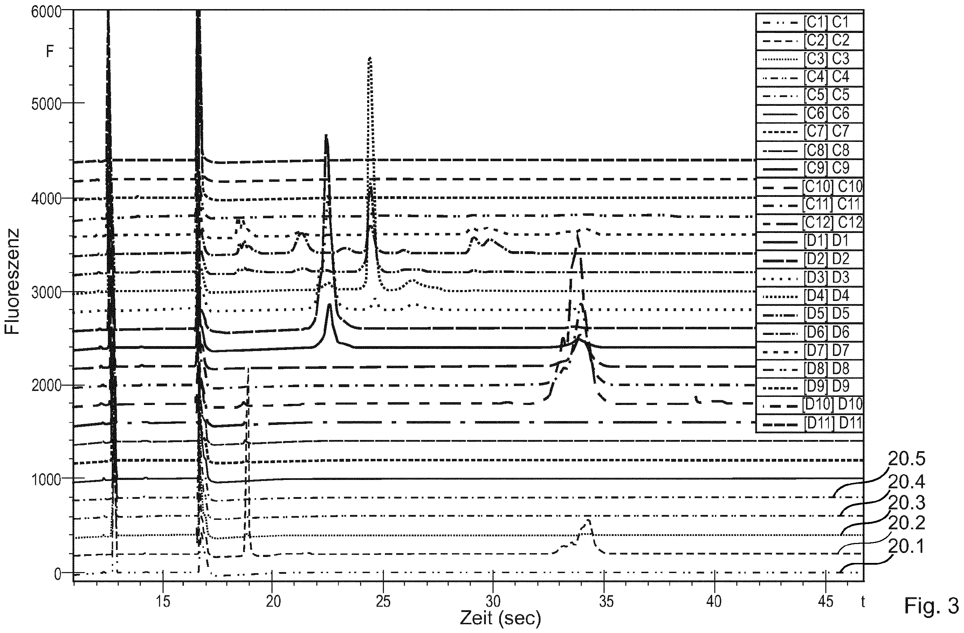

Figur 3 zeigt eine zweidimensionale Darstellung der Fluoreszenz, die mit dem Detektorelement 64 aufgenommen wurde. Die Fluoreszenz F ist gegen die Zeit t für die unterschiedlichen Fraktionen 20.i aufgetragen.

| | | | |
|---|---|---|---|
| **Bezugszeichenliste** | | 58 | Spannungsquelle |
| 10 | Protein-Trennvorrichtung | | |
| 12 | Ionenaustauschersäule | | |
| 14 | Fraktionskollektiv | 60 | zweiter Detektor |
| 16 | Trennvorrichtung | 62 | Lichtquelle |
| 18 | Chip | 64 66 | Detektorelement Mikrotiterplatte |
| 20 | Fraktion | | |
| 22 | Sammelbehälter | i | Laufindex |
| 24 | Probensammler | N | Zahl der Fraktionen |
| 26 | Vorsäule | M | Materialflussrichtung |
| 28 | stationäre Phase | f | Flussrate |
| 29 | stationäre Phase | T F | Zeit Fluoreszenz |
| 30 | Probenaufgabe | | |
| 32 | Probe | | |
| 34 | Fließmittelreservoir | | |
| 36 | erster Behälter | | |
| 38 | erste Komponente | | |
| 40 | zweiter Behälter | | |
| 42 | zweite Komponente | | |
| 44 | Mischer | | |
| 46 | HPLC-Anlage | | |
| 48 | Element | | |
| 50 | Probenaufnahme | | |
| 52 | Probenaufnahme | | |
| 54 | Pipette | | |
| 56 | Nut | | |

## Patentansprüche

1. Verfahren zur zweidimensionalen Proteintrennung, mit den Schritten:
(a) Trennen der Proteine gemäß ihres isoelektrischen Punktes durch lonenaustausch-Chromatographie mittels einer Ionenaustauschersäule (12), sodass ein Fraktionskollektiv (14) erhalten wird, und
(b) kapillarelektrophoretische Trennung des Fraktionskollektivs (14), **dadurch gekennzeichnet, dass**
(c) die kapillarelektrophoretische Trennung mittels eines Chips (18) durchgeführt wird, und
(d) der Ionenaustauschersäule (12) eine Vorsäule (26) vorgeschaltet wird, die eine lipophile stationäre Phase aufweist.

2. Verfahren nach Anspruch 1, **dadurch gekennzeichnet, dass** der Gehalt zumindest eines Proteins bestimmt wird.

3. Verfahren nach einem der vorstehenden Ansprüche, **dadurch gekennzeichnet, dass** eine Trennstrecke bei der Mikrochip-Kapillarelektrophorese höchstens 30 Millimeter, insbesondere höchstens 25 Millimeter lang ist.

4. Verfahren nach einem der vorstehenden Ansprüche, **dadurch gekennzeichnet, dass**
- das Durchführen der lonenaustausch-Chromatographie unter Gradientenelution erfolgt,
- wobei eine Konzentration eines Alkalimetallhalogenids, insbesondere von Natriumchlorid, mit der Zeit zunimmt.

5. Verfahren nach Anspruch 4, **dadurch gekennzeichnet, dass**
(a) bei der lonenaustausch-Chromatographie
- eine erste Komponente (38), die mittels Tris(hydroxymethyl)aminomethan auf einen pH-Wert 8,5 ± 0,2 gepuffert ist und
- eine zweite Komponente (39), die sich nur dadurch von der ersten Komponente (38) unterscheidet, dass sie Natriumchlorid, insbesondere in einer Konzentration von 0,75 ± 0,15 mol/Liter, enthält, verwendet werden und
(b) die Konzentrationsänderungsgeschwindigkeit 2,5%/ min ± 0,5%/ min beträgt.

6. Verfahren nach einem der Ansprüche 4 oder 5, **gekennzeichnet durch** den Schritt
- Regenerieren der Ionenaustauschersäule (12) durch Spülen der lonenaustauschersäule (12) mit der ersten Komponente (38), die zusätzlich Natriumchlorid in einer Konzentration von zumindest 1 mol/Liter enthält, für zumindest 5 Minuten, und danach
- Rekonditionieren der Ionenaustauschersäule (12) durch Spülen der Ionenaustauschersäule (12) mit der ersten Komponente (38) für zumindest 8 Minuten.

7. Verfahren nach einem der vorstehenden Ansprüche, **dadurch gekennzeichnet, dass** die kapillarelektrophoretische Trennung mittels einer elektrischen Spannung von im Mittel höchstens 800 Volt, insbesondere höchstens 400 Volt, erfolgt.

8. Protein-Trennvorrichtung (10) mit
(i) einer Ionenaustauschersäule (12) zum Durchführen einer Ionenaustausch-Chromatographie, sodass ein Fraktionskollektiv (14) erhalten wird, und
(ii) einer Trennvorrichtung (16) zur kapillarelektrophoretische Trennung des Fraktionskollektivs (14),
**dadurch gekennzeichnet, dass**
(iii) die Trennvorrichtung (16)
- einen Chip (18), der
zumindest eine Nut (56) aufweist, die in einer Oberfläche des Chips (18) ausgebildet ist, und
eine in der zumindest einen Nut (18) angeordnete Trennmatrix, insbesondere ein Elektrophoresegel, besitzt, und
- eine Spannungsquelle (58), die die Trennmatrix kontaktiert, umfasst, und
(iv) die Protein-Trennvorrichtung (10) eine Vorsäule (26) aufweist, die der Ionenaustauschersäule (12) vorgeschaltet ist und die eine lipophile stationäre Phase aufweist.

9. Protein-Trennvorrichtung nach Anspruch 8, **gekennzeichnet durch**
(i) einen Probensammler (24), der eingerichtet ist zum automatischen Sammeln der Fraktionen (20) des Fraktionskollektivs (14) in diskreten Sammelbehältern (22), und
(ii) eine Pipettiervorrichtung, die ausgebildet ist zum automatischen Entnehmen von Proben aus den Sammelbehältern (22) und Einbringen der Proben in je einen Startbereich der zumindest einen Nut (14).

## Claims

1. A method for two-dimensional protein separation featuring the steps:
(a) separation of the proteins according to their isoelectric point by way of ion exchange chromatography using an ion exchange column (12) to obtain a fraction collective (14), and
(b) capillary electrophoretic separation of the fraction collective (14), **characterised by** the fact that
(c) the capillary electrophoretic separation is conducted by means of a chip (18), and
(d) the ion exchange column (12) is preceded by a precolumn (26) that comprises a lipophilic stationary phase.

2. The method according to claim 1, **characterised by** the fact that the content of at least one protein is determined.

3. The method according to one of the preceding claims, **characterised by** the fact that a separation distance in the microchip capillary electrophoresis is at most 30 millimetres long, in particular at most 25 millimetres long.

4. The method according to one of the preceding claims, **characterized by** the fact that
- ion exchange chromatography is performed using gradient elution,
- wherein a concentration of an alkali metal halogenide, especially sodium chloride, increases over time.

5. The method according to claim 4, **characterised by** the fact that
(a) the ion exchange chromatography uses
- a first component (38), which is buffered to a pH of 8.5 ± 0.2 by means of tris(hydroxymethyl)aminomethane, and
- a second component (39), which only differs from the first component (38) in that it contains sodium chloride, in particular at a concentration of 0.75 ± 0.15 mol/litre, and
(b) the concentration change rate is 2.5%/ min ± 0.5 %/ min.

6. The method according to one of the claims 4 or 5, **characterised by** the step:
- regeneration of the ion exchange column (12) by rinsing the ion exchange column (12) with the first component (38), which also contains a sodium chloride concentration of at least 1 mol/litre, for at least 5 minutes, and subsequently
- reconditioning of the ion exchange column (12) by rinsing the ion exchange column (12) with the first component (38) for at least 8 minutes.

7. The method according to one of the preceding claims, **characterised by** the fact that the capillary electrophoretic separation is conducted by means of an electrical voltage of on average at most 800 volts, in particular at most 400 volts.

8. A protein separation device (10) with
(i) an ion exchange column (12) for conducting ion exchange chromatography to obtain a fraction collective (14), and
(ii) a separation device (16) for the capillary electrophoretic separation of the fraction collective (14),
**characterised by** the fact that
(iii) the separation device (16) has
- a chip (18) that comprises
at least one groove (56) formed in a surface of the chip (18) and
a separation matrix, in particular an electrophoresis gel, arranged in the at least one groove (18) and
- a voltage source (58), which contacts the separation matrix, and
(iv) the protein separation device (10) comprises a precolumn that precedes the ion exchange column (12) and features a lipophilic stationary phase.

9. The protein separation device according to claim 8, **characterised by**
(i) sample collector (24) configured to automatically collect the fractions (20) of the fraction collective (14) in discrete reservoirs (22), and
(ii) a pipetting device that is designed to automatically take samples from the reservoirs (22) and
introduce the samples into a respective starting region of the at least one groove (14).

## Revendications

1. Procédé de séparation bidimensionnelle des protéines, comprenant les étapes consistant à :
(a) séparer les protéines en fonction de leur point isoélectrique par chromatographie à échange d'ions à l'aide d'une colonne d'échange d'ions (12) de manière à obtenir un collectif fractionnaire (14), et
b) séparer par voie électro-phorétique capillaire le collectif fractionnaire (14),
**caractérisé en ce que**
c) la séparation électro-phorétique capillaire est effectuée à l'aide d'une puce (18), et
d) une pré-colonne (26) ayant une phase stationnaire lipophile est montée en amont de la colonne d'échange d'ions (12).

2. Procédé selon la revendication 1,
**caractérisé en ce que**
on détermine la teneur d'au moins une protéine.

3. Procédé selon l'une des revendications précédentes,
**caractérisé en ce que** lors de l'électrophorèse capillaire par micro-puce, une distance de séparation est au maximum de 30 millimètres, en particulier au maximum de 25 millimètres de long.

4. Procédé selon l'une des revendications précédentes,
**caractérisé en ce que**
- la chromatographie d'échange d'ions est réalisée sous élution en gradient,
- la concentration d'un halogénure de métal alcalin, en particulier le chlorure de sodium, augmente avec le temps.

5. Procédé selon la revendication 4,
**caractérisé en ce que**
(a) lors de la chromatographie par échange d'ions, on utilise
- un premier composant (38) tamponné à une valeur de pH de 8,5 ± 0,2 au moyen de tris(hydroxyméthyl)aminométhane, et
- un second composant (39) ne différant du premier composant (38) que par sa teneur en chlorure de sodium, en particulier à une concentration de 0,75 ± 0,15 mol/litre, et
(b) la vitesse de variation de la concentration est de 2,5 %/min ± 0,5 %/min.

6. Procédé selon l'une des revendications 4 ou 5,
**caractérisé par** l'étape consistant à
- régénérer la colonne d'échange d'ions (12) par rinçage de la colonne d'échange d'ions (12) pendant au moins 5 minutes avec le premier composant (38) qui contient en supplément du chlorure de sodium à une concentration d'au moins 1 mol/litre, et ensuite
- reconditionner la colonne d'échange d'ions (12) par rinçage de la colonne d'échange d'ions (12) avec le premier composant (38) pendant au moins 8 minutes.

7. Procédé selon l'une des revendications précédentes,
**caractérisé en ce que** la séparation électro-phorétique capillaire est effectuée au moyen d'une tension électrique de 800 volts au maximum en moyenne, en particulier de 400 volts au maximum.

8. Dispositif de séparation des protéines (10), comportant
(i) une colonne d'échange d'ions (12) pour effectuer une chromatographie par échange d'ions afin d'obtenir un collectif fractionnaire (14), et
(ii) un dispositif de séparation (16) pour la séparation électro-phorétique capillaire du collectif fractionnaire (14),
**caractérisé en ce que**
(iii) le dispositif de séparation (16) comprend
- une puce (18), qui
présente au moins une rainure (56) formée dans une surface de la puce (18), et
une matrice de séparation, en particulier un gel d'électrophorèse, disposé(e) dans ladite au moins une rainure (18), et
- une source de tension (58) en contact avec la matrice de séparation, et
(iv) le dispositif de séparation des protéines (10) comprend une pré-colonne (26) qui est montée en amont de la colonne d'échange d'ions (12) et qui présente une phase stationnaire lipophile.

9. Dispositif de séparation des protéines selon la revendication 8, **caractérisé par**
(i) un collecteur d'échantillons (24) adapté pour collecter automatiquement les fractions (20) du collectif fractionnaire (14) dans des récipients de collecte discrets (22), et
(ii) un dispositif de pipetage réalisé pour prélever automatiquement des échantillons hors des récipients de collecte (22) et pour les introduire dans une zone de départ respective de ladite au moins une rainure (14).
